Europäisches Patentamt

European Patent Office

Office européen des brevets

(11) Publication number: **0 131 896**

**B1**

(12) **EUROPEAN PATENT SPECIFICATION**

(45) Date of publication of patent specification: **07.01.87**

(51) Int. Cl.⁴: **H 02 H 9/06,** H 02 H 3/07

(21) Application number: **84108088.0**

(22) Date of filing: **10.07.84**

(54) Industrial or domestic overvoltage protective device.

(30) Priority: **13.07.83 FR 8311681**

(43) Date of publication of application:
**23.01.85 Bulletin 85/04**

(45) Publication of the grant of the patent:
**07.01.87 Bulletin 87/02**

(84) Designated Contracting States:
**CH DE GB IT LI**

(56) References cited:
**GB-A-2 010 613**
**US-A-3 723 820**
**US-A-3 878 436**

(73) Proprietor: **CLAUDE S.A.**
**Tour Horizon 52, Quai De Dion Bouton**
**F-92800 Puteaux (FR)**

(72) Inventor: **Huvet, Jean Marie**
**27, Grande Rue Ecueil**
**F-51500 Rilly La Montagne (FR)**
Inventor: **Serrie, Gérard Jean**
**Résidence Les Tuileries 1b, rue Gustave Laurent**
**F-51100 Reims (FR)**

(74) Representative: **Bernhardt, Klaus et al**
**Radeckestrasse 43**
**D-8000 München 60 (DE)**

Courier Press, Leamington Spa, England.

EP 0 131 896 B1

## Description

The invention relates to overvoltage protective devices the function of which is to disconnect the load from the power line when the protective arrester, connected to the line is not able to dissipate the overvoltage energy without destructve effect of the components of the associated arrester.

The protection of the load against the overvoltages is generally assumed by gas spark gap associated with variable resistors the function of which is to bound the voltage applied to the load under a non-destructive value and to flow the energy of the overvoltages towards the earth or to dissipate it in the protective module. The time life of such · arresters basically depends on the number of perturbances. In fact, when the arrester must operate numerous times in a short period, the thermal effect may destroy it and this results in a shunt of both conductors of the line or in the earthing of one of them.

In order to avoid these disadvantages, calibrated fuses are often used, but such fuses inherently limit the load and must be changed after each important perturbance.

It is then highly desirable to design an overvoltage protective device which may isolate the load as soon as the associated arrester is not able to dissipate the overvoltage energy without destruction of the arrester or of the joined fuses.

Moreover, it is highly desirable that the operation of such a device does not require a human intervention to reconnect the load to the power line if the perturbances are transitory and fugitive.

Accordingly, it is an object of the invention to provide an industrial or domestic protective device which presents the above-mentioned advantages.

To achieve this object, the invention starts from disconnecting the load and the arrester from the power line when the energy to be dissipated in the arrester matches a determined threshold. The re-connection automatically appears after a first time lapse. If the disconnection appears more than a determined number of times during a determined second time lapse, the load and the arrester remain disconnected in order to leave somebody to verify the electrical installation and to manually reset the device. If said determined number of times is not matched during the second lapse, the former disconnections are forgotten.

According to the invention, the domestic overvoltage protective device includes two detectors of overvoltage respectively connected between each one of the power line conductors and one input of the arrester, and having their outputs connected to an OR-gate. The output signal of this gate is applied to a threshold gate. The output of this threshold gate is connected to a first monostable trigger having a first time constant and controlling through a latch gate the opening of a bipolar device insulating the load from the power line (e.g. relay contacts), this bipolar device being located in series in both power line conductors between the detector connection to the power line and the connection to the power line of the device supply circuit.

In order to allow an automatic reconnection of the load after each perturbance, if there is not too much successive important perturbances or no problem in the electrical installation, the output of the threshold gate is also connected to a second nonostable trigger having a second time constant higher than the first one, and is also connected to the clock input of a counter having its return-to-zero input connected to the first output of the second monostable trigger having a second output connected to the second input of the latch gate.

In order to avoid the disconnection of the load for a fugitive but important overvoltage perturbance, and to increase the performances of the device, it is preferred to connect an integrator between the OR-gate and the threshold gate. Then the signal applied to the threshold gate is the integrated signal of the output signal of the OR-gate and is sensibly function of the energy dissipated by the arrester and not only of the perturbance current amplitude.

In order to achieve the manual reset operation when the latch gate has locked open the bipolar device, a second latch gate may be connected to the output of the second monostable trigger and the output of the counter for avoiding the automatic application of a return-to-zero signal to the counter. A switch, e.g. a push-button switch, is then connected to this second latch gate in order to manually apply this return-to-zero signal and to reset the device.

This invention will be better understood, and other objects, advantages and features thereof will appear by reading the following description of an embodiment, non-boundingly given, to which two drawings are joined.

Figure 1 is a schematic diagram of the electrical circuit of an overvoltage protective device according to the invention, and

Figure 2 is the electrical circuit of the preferred embodiment of the device according to the invention.

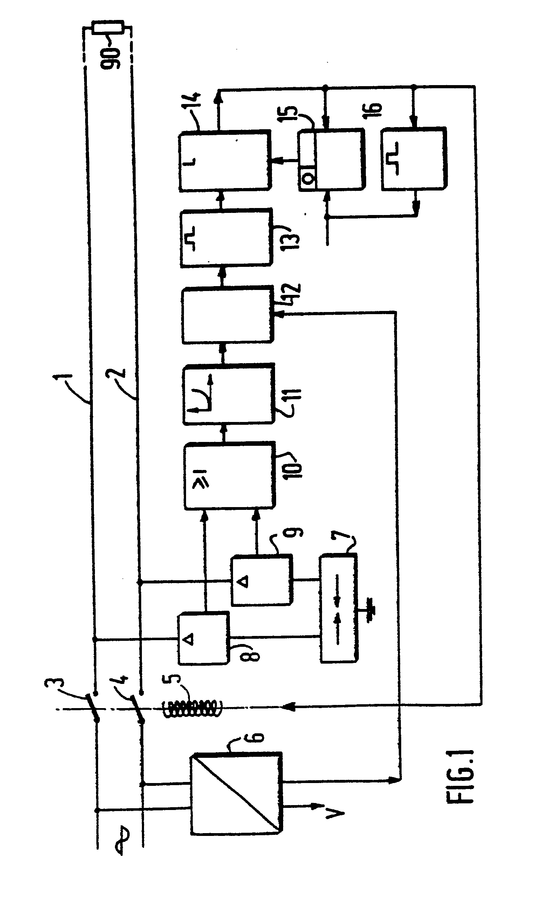

Referring now to Figure 1, the power line has two electrical conductors 1, 2 connecting the a.c. source — at the left on the Figure 1 — to a load 90 — at the right of the Figure 1 — via the contacts 3, 4 of a normally closed relay the opening of which is controlled by the coil 5. The device supply circuit 6 is connected to the power line upwardly as regard to the relay contacts 3, 4 in order to supply the device even if these contacts are open.

The arrester 7 is clasically connected to both conductors of the power line and to ground in order to allow the dissipation of the overvoltage energy. The connection of the arrester 7 to the power line is located downwardly as regard to the relay contacts 3, 4 in order to isolate both load and arrester when the contacts are open.

In series with each conductor between the power line and the arrester 7 are respectively connected two detectors 8, 9 of overvoltage currents in order to detect an overvoltage on any one of the conductors of the power line as well as an overvoltage on both conductors. These detectors 8, 9 are connected to an analogical OR-gate 10 in order to deliver a signal for any overvoltage detection. The OR-gate output is connected to an integrator 11 in order to obtain a signal function of the overvoltage energy dissipated by the arrester 7. When this signal is higher than a determined threshold, the threshold gate 12 applies a signal to first monostable trigger 13 the time constant of which is about one second. This trigger 13 controls, via a latch gate 14 the energizing of the coil 5 in order to open the relay contacts 3, 4 as soon as the energy dissipated by the arrester 7 is no more admissible for the arrester. A signal is derivated from the latch gate 14 to be applied to the clock input of a counter 15 and to a second monostable trigger 16.

The counter 15 is incremented each time that a signal is delivered in order to control the opening of the relay contacts 3, 4.

The second monostable trigger 16 has a time constant higher than the one of the first trigger 13; this time constant is about one minute. The trigger 16 is connected to generate a return-to-zero signal which is applied to the counter 15 if no new signal has crossed the latch gate 14 during the time constant of the trigger 16. If the counter 15 has been incremented a predetermined number of times without having been returned-to-zero, it generates a signal which locks the latch gate 14, the relay contacts 3, 4 remaining then open up to a manual application of the return-to-zero signal to the counter 15.

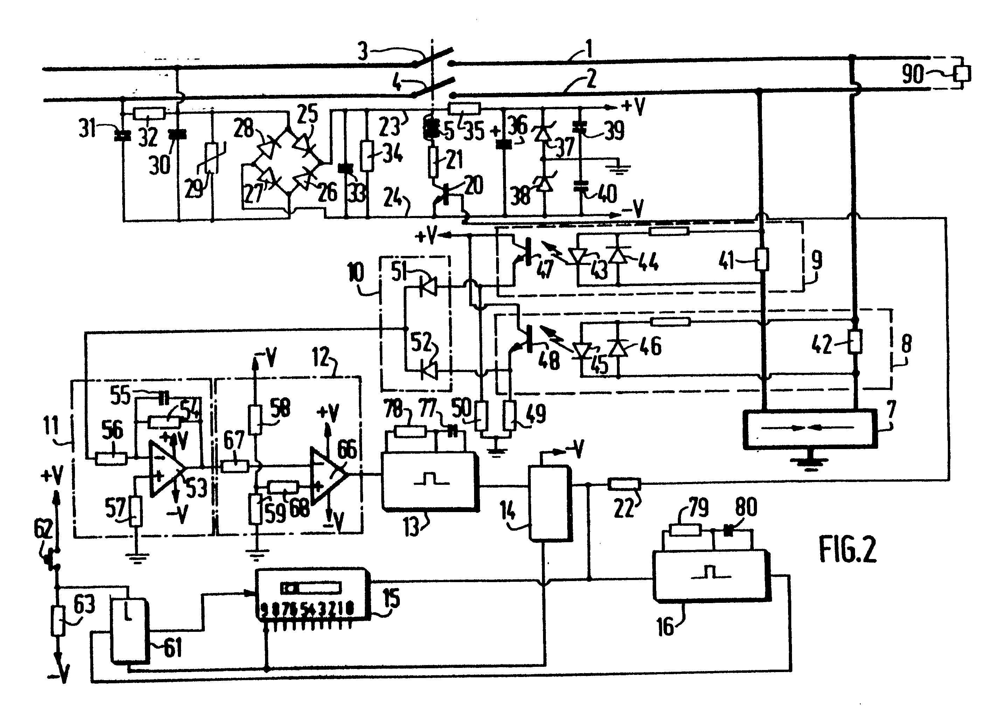

Referring now to Figure 2 showing the circuit of such an industrial or domestic overvoltage protective device which has been designed for a 220 Volts, 50 Hertz, 10 Ampères power line, it can easily be seen that the relay contacts 3, 4 are located on the power line between the upstream connection to the supply circuit 6 of the device and the downstream connection of the arrester 7. The coil 5 controlling the state of the relay contacts 3, 4 is connected in series with a resistor 21 and the emitter-collector junction of a transistor 20 the basis of which is connected to the output of the latch gate 14 via a resistor 22. This branch including the coil 5, the transistor 20 and the resistor 21 is connected between the two output conductors 23, 24 of the device-supply circuit. This last is of known type and comprises a classical rectifier including a bridge of diodes 25, 26, 27, 28 having its inputs shunted by a varistor 29, a capacitor 30, and a capacitor 31 in series connection with a resistor 32. The terminals of the resistor 32 are respectively connected to the conductors 1, 2 of the power line. The outputs of the bridge are shunted by a capacitor 33 and a resistor 34 for filtering. A resistor 35 is connected in series in the output conductor 23, and another capacitor 36 is used as a filter. Since the device uses integrated circuits, three outputs are needed for the supply circuit: one delivering a d.c. voltage +V, one delivering the inversed d.c. −V, and one being connected to earth. To achieve it, the supply circuit also includes, connected in a classical way, two Zener diodes 37, 38 in series connection between both output conductors 23, 24, each of them being shunted by a capacitor 39, 40 respectively.

Each one of the detectors of overvoltages 8, 9 includes a resistor of low value 41, 42 respectively, connected in series with one input of the arrester 7. Between the terminals of each of the resistors 41, 42 is connected a set of two parallel Procédé electroluminescent diodes 43—44, 45—46, respectively, disposed inversely. Obviously, each set of diodes may be substituted by one two-way electroluminescent semi-conductor. Electroluminescent units are here used in order to electrically decouple the circuit.

These diodes respectively control electroluminescent transistors 47, 48, the emitter of each of which is connected to earth via a respective resistor 49, 50, with the voltage V applied to the collector of each of the transistors. The output of each detector is the junction point of the emitter and of the corresponding resistor 49, 50. These two outputs are connected to the inputs of an OR-gate 10 constituted by two diodes 51, 52 the cathodes of which are connected together in order to be the output of the OR-gate 10 the inputs of which being the anodes of these diodes 51, 52. With such a design, the output signal of the OR-gate 10 is an analogical signal function of the current flowing on any one of the inputs of the arrester 7.

The output signal of the OR-gate 10 is applied to the input terminal of the integrator 11 which is essentially constituted in a conventional way, by a differential amplifier 53 having a reaction loop including in parallel a resistor 54 and a capacitor 55. The inputs of this differential amplifier 53 are respectively connected to the output of the OR-gate 10 through a resistor 56 and to the earth through a resistor 57. The signal delivered by the integrator 11 is applied to a threshold gate 12 which includes a differential amplifier 66 one input of which is connected to the output terminal of the integrator 11 througha resistor 67, the other input being connected through a resistor 68 to a voltage divider including two resistors 58, 59. The output of the threshold gate 12 is connected to a first monostable trigger 13 the time constant of which is determined by the value of the capacitor 77 and of the resistor 78. Its output terminal is connected to one input of a latch gate 14, known on the market under the name "D-Latch".

We find also a second monostable trigger 16 the time constant of which is about one minute and is determined by the value of the resistor 79 and of the capacitor 80, connected as before mentioned to the output of the latch gate 14 which is also connected to the clock input of a decimal counter 15.

On the Figure, the tenth output of the counter 15 (output #9) is connected to the second input of the latch gate 14 but, obviously it is possible to connect any other output of the counter 15 according to the wished result. In order to achieve the manual reset operation, a second latch gate 61 is connected to the output of the second monostable trigger 16 and to the same output of the decimal counter 15, in order to avoid to atuomatically apply a return-to-zero signal to the decimal counter 15 when the counter 15 generates a signal on its used output. For this reason, a push-botton switch 62 is provided in series with a resistor 63 between the voltage V and earth. The junction point of this push-button switch 62 and the resistor 63 is connected to one input of the latch gate 61.

In operation, the signal delivered by the OR-gate 10, which is function of the current applied to the input of the arrester 7, is integrated by the integrator 11. When the resulting signal matches a value determined by the bridge of resistors 58, 59, a pulse is applied to the first trigger 13 which changes of state. Doing that, the transistor 20 goes on on-state and the coil 5 is energized in order to control the opening of the relay contacts 3, 4. Simultaneously, the counter 15 is incremented and a pulse is applied to the second monostable trigger 16 the time constant of which is longer than the one of trigger 13. At the end of the time constant of the trigger 13, transistor 20 goes back to its off-state deenergizing to the coil 5 and closing the relay contacts 3, 4. If no new impulse is applied to the first trigger input during the time constant of the second trigger 16, this last applies through the second latch gate 61 a return-to-zero signal to the counter 15 which returns to the zero state.

But if another impulse is applied to the first trigger 13 during the time constant of the second trigger 16, the relay contacts 3, 4 are once more opened during the time constant of the first trigger 13 and the counter delivers a signal on its second output.

If new impulses are applied to the first trigger input before that the second trigger 16 comes back to its stable state, the relay contacts 3, 4 are each time opened, and the counter 15 is incremented. At the tenth impulse, the counter 15 delivers a pulse which is applied to the latch gate 61 in order to lock it, forbidding the second monostable trigger 16 to apply a return-to-zero signal; said pulse delivered by the counter 15 is also applied to the latch gate 14 in order to lock it too and to lock open the relay contacts 3, 4.

Then only a manual intervention on the push-button switch 62 may reset the device. In the described embodiment of the invention, the monostable triggers are integrated circuits #4528 B, the counter is an integrated circuit #4017 B, the latch gates are D-Latches #4042, and all these components are available on the market under the trademark "INTEL". The value of the resistors 41—42 of the overvoltage detectors 8—9 is about a few tens of milliOhms.

**Claims**

1. An industrial or domestic overvoltage protective device for disconnecting a load (90) and a corresponding protective arrester (7) from both conductors (1, 2) of a power line when said arrester (7) is not able to dissipate all the overvoltage energy without destructive effect, characterized in that it includes in combination:
— a device-supply circuit (6) connected upstream between the power source and a bipolar interrupting device;
— two detectors of overvoltage (8, 9) respectively each connected between one of the power line conductors (1, 2) and one input of said arrester (7);
— one OR-gate (10) having one input connected to the output of each of said detectors (8, 9);
— a threshold gate (12) having one input connected to the output of said OR-gate (10);
— a first monostable trigger (13) having a first time constant, to which is applied the output signal of said threshold gate (12);
— a first latch gate (14) to which is applied the output signal of said first monostable trigger (13), and having an output connected to means (5) for controlling the state of the bipolar interrupting device (3, 4) located in series in each of the power line conductors (1, 2) between the downstream detector connection between the power line and the detector and the upstream connection to the power line of the device-supply circuit (6).

2. A device according to claim 1 characerized in that it includes moreover:
— a second monostable trigger (16) having a second time constant higher than the first one and having an output connected to a second input of said first latch gate (14);
— a counter (15) having its return-to-zero input connected to a second output of said second monostable trigger (16) and its clock input connected to the output of said first latch gate (14).

3. A device according to claim 2 characterized in that it includes moreover a second latch gate (61) connected to the output of said second monostable trigger (16) and to the output of said counter (15), and having an output connected to a push-button switch (62) in order to manually apply a return-to-zero signal to said counter (15).

4. A device according to claim 2 or 3 characterized in that said counter (15) is a decimal counter.

5. A device according to any one of claims 1 to 4 characterized in that said latch gates (14, 61) are D-Latch integrated circuits.

6. A device according to any one of claims 1 to 5 characterized in that it includes moreover an integrator (11) having its input connected to the output of said OR-gate (10) and its output connected to the input of said threshold gate (12) in order to apply to said threshold gate (12) a signal which is sensibly function of the energy dissipated in said arrester (7).

7. A device according to any one of the former claims characterized in that the time constant of said first monostable trigger (13) is in order of one second, while the time constant of said second monostable trigger (16) is in order of one minute, said counter (15) applying a lock signal to said first latch gate (14) after about ten disconnections of the bipolar insulating device (3, 4) during the time constant of said second monostable trigger (16).

**Revendications**

1. Dispositif de protection contre les surtensions à usage domestique ou industriel, destiné à isoler une charge (90) et un parafoudre de protection associé (7), par rapport aux deux conducteurs (1, 2) de la ligne d'alimentation secteur lorsque le dit parafoudre (7) n'est pas capable de dissiper toute l'énergie de surtension sans effet destructif, caractérisé en ce qu'il comprend en combinaison:
— un circuit d'alimentation (6) du dispositif, connecté en amont entre la source d'alimentation et un dispositif bipolaire d'isolation,
— deux détecteurs de surtension (8, 9) respectivement connectés entre chacun des conducteurs (1, 2) de la ligne d'alimentation et une entrée du dit parafoudre (7),
— une porte OU (10) dont une entrée est connectée à la borne de sortie de chacun des dits détecteurs (8, 9),
— un circuit à seuil (12) dont une entrée est reliée à la borne de sortie de la dite porte OU (18),
— une première bascule monostable (13) ayant une première constante de temps, à laquelle est appliqué le signal de sortie du dit circuit à seuil (12),
— une première bascule de verrouillage (14) à laquelle est appliqué le signal de sortie de la dite première bascule monostable (13), et ayant une sortie reliée à des moyens de commande (5) de l'état du dispositif bipolaire d'isolation (3, 4) disposé en série dans chacun des deux conducteurs (1, 2) de la ligne d'alimentation secteur entre la connexion en aval des détecteurs entre la ligne d'alimentation et le détecteur, et la connexion en amont à la dite ligne du circuit d'alimentation (6) du dispositif.

2. Dispositif selon la revendication 1 caractérisé en ce qu'il inclut en outre:
— une seconde bascule monostable (16) ayant une seconde constante de temps supérieure à celle de la première et ayant une sortie reliée à la seconde entrée de la dite première bascule de verrouillage (14),
— un compteur (15) ayant son entrée de remise à zéro reliée à une seconde sortie de la dite seconde bascule monostable (16) et son entrée d'horloge reliée à la sortie de la dite première bascule de verrouillage (14).

3. Dispositif selon la revendication 2 caractérisé en ce qu'il comprend en outre une seconde bascule de verrouillage (61) reliée à la dite seconde bascule monostable (16) et à la sortie du dit compteur (15), et ayant une entrée reliée à un interrupteur manuel (62) de façon à appliquer manuellement un signal de remise à zéro au dit compteur (15).

4. Dispositif selon les revendications 2 ou 3 caractérisé en ce que le dit compteur (15) est un compteur décimal.

5. Dispositif selon l'une quelconque des revendications 1 à 4 caractérisé en ce que les dites bascules de verrouillage (14, 61) sont des circuits intégrés du type "D-Latch".

6. Dispositif selon l'une quelconque des revendications 1 à 5 caractérisé en ce qu'il comprend en outre un intégrateur (11) dont une entrée est reliée à la sortie de la dite porte OU (10) et sa sortie reliée à l'entrée du dit circuit à seuil (12) de façon à appliquer au dit circuit à seuil (12) un signal qui soit sensiblement fonction de l'énergie dissipée dans le dit parafoudre (7).

7. Dispositif selon l'une quelconque des revendications précédentes caractérisé en ce que la constante de temps de la dite première bascule monostable (13) est de l'ordre d'une seconde, tandis que celle de la dite seconde bascule monostable (16) est de l'ordre d'une minute, le dit compteur (15) appliquant un signal de verrouillage à la dite première bascule de verrouillage (14) après environ une dizaine d'ouvertures du dispositif bipolaire d'isolation (3, 4) pendant la constante de temps de la dite seconde bascule monostable (16).

**Patentansprüche**

1. Überspannungsschutzeinrichtung für Anwendungen in der Industrie oder im Haushalt, zum Trennen einer Last (90) und eines zugehörigen Schutz-Ableiters (7) von beiden Leitern (1, 2) einer Versorgungsleitung, wenn der Ableiter (7) nicht in der Lage ist, alle Überspannungsenergie ohne destruktiven Effekt abzuführen, gekennzeichnet durch die Kombination folgender Merkmale:
— eine Versorgungsschaltung (6) für das Gerät, die mit der Versorgungsleitung stromaufwärts zwischen der Stromquelle und einer bipolaren Trennvorrichtung angeschlossen ist;
— zwei Überspannungsdetektoren (8, 9) die jeweils zwischen einen der Versorgungsleitungsleiter (1, 2) und einen Eingang des Ableiters (7) geschaltet sind;
— ein ODER-Gatter (10), von dem ein Eingang mit dem Ausgang jedes der beiden Detektoren (8, 9) verbunden ist;
— ein Schwellwertgatter (12), von dem ein Eingang mit dem Ausgang des ODER-Gatters (10) verbunden ist;
— ein erster monostabiler Trigger (13) mit einer ersten Zeitkonstante, an den das Ausgangssignal des Schwellwertgatters (12) angelegt ist;
—ein erstes Latchgatter (14), an das das Ausgangssignal des ersten monostabilen Triggers (13) angelegt ist und dessen Ausgang mit Mitteln (5) zur Steuerung des Zustandes der bipolaren Unterbrechervorrichtung (3, 4) verbunden ist, die in Reihe in jeden der Versorgungsleitungsleiter (1, 2) zwischen dem stromabwärtigen Detektoranschluß zwischen der Versorgungsleitung und dem Detektor und dem stromaufwärtigen Anschluß der Stromversorgungsschaltung (6) für das Gerät an die Leitung angeschlossen ist.

2. Einrichtung nach Anspruch 1, dadurch gekennzeichnet, daß ferner vorgesehen sind:

— ein zweiter monostabiler Trigger (16) mit einer zweiten Zeitkonstante, die höher ist als die erste, und einem Ausgang, der mit einem zweiten Eingang des ersten Latchgatters (14) verbunden ist;

— einen Zähler (15), dessen Auf-Null-Rückstell-Eingang mit einem zweiten Ausgang des zweiten monostabilen Triggers (16) verbunden ist und dessen Takteingang mit dem Ausgang des ersten Latchgatters (14) verbunden ist.

3. Einrichtung nach Anspruch 2, dadurch gekennzeichnet, daß ferner vorgesehen sind ein zweites Latchgatter (61), das an den Ausgang des zweiten monostabilen Triggers (16) und den Ausgang des Zählers (15) angeschlossen ist und dessen Ausgang mit einem Druckknopfschalter (62) verbunden ist, um an den Zähler (15) manuell ein Auf-Null-Rückstell-Signal anzulegen.

4. Einrichtung nach Anspruch 2 oder 3, dadurch gekennzeichnet, daß der Zähler (15) ein Dezimalzähler ist.

5. Einrichtung nach einem der Ansprüche 1 bis 4, dadurch gekennzeichnet, daß die Latchgatter (14, 61) integrierte Schaltungen Typ "D-Latch" sind.

6. Einrichtung nach einem der Ansprüche 1 bis 5, dadurch gekennzeichnet, daß sie ferner einen Integrator (11) enthält, dessen Eingang mit dem Ausgang des ODER-Gatters (10) verbunden ist und dessen Ausgang mit dem Eingang des Schwellwertgatters (12) verbunden ist, um an das Schwellwertgatter (12) ein Signal anzulegen, das sensibel von der im Ableiter (7) abgeführten Energie abhängig ist.

7. Einrichtung nach einem der vorangegangenen Ansprüche, dadurch gekennzeichnet, daß die Zeitkonstante des ersten monostabilen Triggers (13) in der Größenordnung von einer Sekunde liegt, während die Zeitkonstante des zweiten monostabilen Triggers (16) in der Größenordnung von einer Minute liegt, wobei der Zähler (15) ein Verriegelungssignal an das erste Latchgatter (14) nach etwa zehn Trennungen der bipolaren Trennvorrichtung (3, 4) während der Zeitkonstante des zweiten monostabilen Triggers (16) legt.

FIG.1

0 131 896

FIG.2